# FASCICULE DE BREVET EUROPEEN

(11) **EP 3 422 071 B1**
(45) Date de publication et mention de la délivrance du brevet: **27.07.2022**
(21) Numéro de dépôt: 18179231.8
(22) Date de dépôt: 22.06.2018
(51) Int. Cl.: G02B 19/00, F21S 43/20

(54) **DISPOSITIF D'ÉCLAIRAGE OU DE SIGNALISATION DE VÉHICULE AUTOMOBILE**
FAHRZEUGBELEUCHTUNGSVORRICHTUNG UND/ODER FAHRZEUGSIGNALVORRICHTUNG
VEHICLE LIGHTING OR SIGNALLING DEVICE

(30) Priorité: 29.06.2017 FR 1756075
(43) Date de publication de la demande: 02.01.2019
(73) Titulaire: Valeo Vision Belgique, 7822 Meslin l'Evêque (BE)
(72) Inventeur: HERBIN, Cyril, B-7822 MESLIN L'EVEQUE (BE); VALOIS, Christophe, B-7822 MESLIN L'EVEQUE (BE); PERDRIX, Lucas, 7822 MESLIN L'EVEQUE (BE)
(74) Mandataire: Valeo Visibility

(56) Documents cités:
- EP-A1- 3 056 806
- DE-A1-102015 213 827
- FR-A1- 3 011 784
- US-A1- 2013 021 815

## Description

### Domaine technique de l'invention

L'invention concerne un module optique d'un dispositif d'éclairage ou de signalisation d'un véhicule automobile. Elle concerne aussi un dispositif d'éclairage ou de signalisation comprenant un tel module optique. Elle concerne également un véhicule automobile équipé d'un tel dispositif d'éclairage ou de signalisation et/ou d'un tel module optique. Enfin, elle concerne un procédé de fabrication d'un tel dispositif d'éclairage ou de signalisation.

### État de la technique

Un dispositif d'éclairage ou de signalisation de véhicule automobile comprend habituellement, outre sa fonction de feux nocturnes, une fonction de feux diurnes aussi appelée DRL pour « Daytime Running Ligths » et/ou une fonction de feux de position et/ou une fonction de feux clignotant. Pour assurer la fonction DRL et/ou la fonction feux de position, un tel dispositif d'éclairage ou de signalisation comprend généralement un module optique doté d'au moins une source lumineuse associée à un ensemble optique. Le module optique est habituellement au moins partiellement visible. Le document FR 3 011 784 décrit un exemple d'un dispositif d'éclairage ou de signalisation de véhicule automobile.

### Objet de l'invention

Le but de la présente invention est de proposer une solution de fabrication simple et bon marché d'un module optique d'un dispositif d'éclairage ou de signalisation de véhicule automobile présentant des formes spécifiques. En outre, un objet de l'invention est de proposer un module optique ainsi qu'un dispositif d'éclairage ou de signalisation intégrant un tel module optique aisés à assembler.

Pour atteindre cet objectif, l'invention porte sur un dispositif d'éclairage ou de signalisation d'un véhicule automobile comprenant une enceinte formée par un boîtier et une vitre, l'enceinte recevant un module optique comprenant une carte de circuit imprimé munie d'au moins une source lumineuse, notamment une source lumineuse de type diode électroluminescente, et un ensemble optique arrière comprenant au moins un collimateur, notamment un collimateur de type Fresnel, disposé en vis-à-vis de l'au moins une source lumineuse, le module optique comprenant un ensemble optique avant, distinct de l'ensemble optique arrière, doté d'une face avant comprenant au moins deux surfaces d'éclairage transverses disposées à différents niveaux dans la direction longitudinale pour former au moins deux marches d'une forme globale en escalier, l'ensemble optique avant étant fixé en contact direct avec l'ensemble optique arrière, le boîtier comprenant des moyens de positionnement du module optique et au moins un moyen de fixation du module optique, les moyens de positionnement du module optique comprenant au moins deux axes, notamment au moins deux axes s'étendant longitudinalement ou sensiblement longitudinalement depuis le fond du boîtier vers l'avant du boîtier, le dispositif comprenant un moyen de fixation du module optique comprenant au moins une tige, notamment au moins une tige bouterollée s'étendant longitudinalement ou sensiblement longitudinalement depuis le fond du boîtier vers l'avant du boîtier,et l'ensemble optique arrière comprenant des protubérances coopérant avec des orifices et/ou dégagements de la carte de circuit imprimé pour la fixation de l'ensemble optique arrière et de la carte de circuit imprimé.

L'ensemble optique arrière et l'ensemble optique avant peuvent se présenter chacun en une seule pièce monobloc, l'ensemble optique arrière et l'ensemble optique avant comprenant chacun au moins un moyen de positionnement.

Le au moins un moyen de positionnement peut comprendre un orifice.

L'ensemble optique arrière et l'ensemble optique avant peuvent comprendre des surfaces de contact participant à leur fixation respective. Le boîtier peut comprendre au moins un moyen de positionnement commun aux deux ensembles optiques arrière et avant.

Le au moins un moyen de fixation du module optique peut comprendre au moins une ouverture ménagée dans l'ensemble optique avant coopérant avec au moins une languette ménagée sur l'avant du boîtier.

L'invention porte encore sur un véhicule automobile comprenant un dispositif d'éclairage ou de signalisation tel que défini précédemment et/ou un module optique tel que défini précédemment.

La présente divulgation porte enfin sur un procédé de fabrication d'un dispositif d'éclairage ou de signalisation tel que défini précédemment, comprenant les étapes suivantes :
- assembler, notamment par clippage, l'ensemble optique arrière comprenant au moins un collimateur sur la carte de circuit imprimé, de sorte à ce que l'au moins une source lumineuse soit en vis-à-vis de l'ensemble optique arrière,
- fixer l'assemblage comprenant l'ensemble optique arrière et la carte de circuit imprimé dans le boîtier, notamment par bouterollage de la tige,
- assembler l'ensemble optique avant sur l'ensemble optique arrière et sur le boîtier, de sorte à ce que l'ensemble optique avant se retrouve en contact direct avec l'ensemble optique arrière.

L'étape d'assemblage de l'ensemble optique avant sur le boîtier peut comprendre une étape de collage au niveau d'une languette du boîtier avec au moins une ouverture d'une oreille de l'ensemble optique avant. Le procédé de fabrication peut comprendre une étape de connexion d'une unité de commande de l'au moins une source lumineuse, notamment une unité de commande intégrée à la carte de circuit imprimé, avec un connecteur correspondant du boîtier.

### Description sommaire des dessins

D'autres avantages et caractéristiques ressortiront plus clairement de la description qui va suivre d'un mode de réalisation de l'invention donné à titre d'exemple non limitatif et représenté sur les dessins annexés, dans lesquels :
La figure 1 représente une vue schématique d'un véhicule automobile selon un mode de réalisation de l'invention.
La figure 2 représente une vue de face d'un dispositif d'éclairage ou de signalisation d'un véhicule automobile selon un mode de réalisation de l'invention.
La figure 3 représente une vue en coupe selon un plan transversal longitudinal d'un dispositif d'éclairage ou de signalisation de véhicule automobile selon le mode de réalisation de l'invention.
La figure 4 représente une vue de détail en coupe selon un plan transversal longitudinal d'un dispositif d'éclairage ou de signalisation de véhicule automobile selon le mode de réalisation de l'invention.
La figure 5 représente une vue en perspective d'un ensemble optique arrière d'un module optique selon un mode de réalisation de l'invention.
La figure 6 représente une vue en perspective d'un ensemble optique avant d'un module optique selon un mode de réalisation de l'invention.
La figure 7 représente une vue éclatée en perspective d'une première partie d'un module optique selon un mode de réalisation de l'invention.
La figure 8 représente une vue en perspective de la première partie d'un module optique selon le mode de réalisation de l'invention.
La figure 9 représente une vue de face partielle d'un dispositif d'éclairage ou de signalisation selon le mode de réalisation de l'invention.
La figure 10 représente une vue en perspective partielle d'un dispositif d'éclairage ou de signalisation selon le mode de réalisation de l'invention.
La figure 11 représente une vue en coupe selon un plan vertical longitudinal d'un dispositif d'éclairage ou de signalisation selon le mode de réalisation de l'invention.

### Description d'un mode de réalisation de l'invention

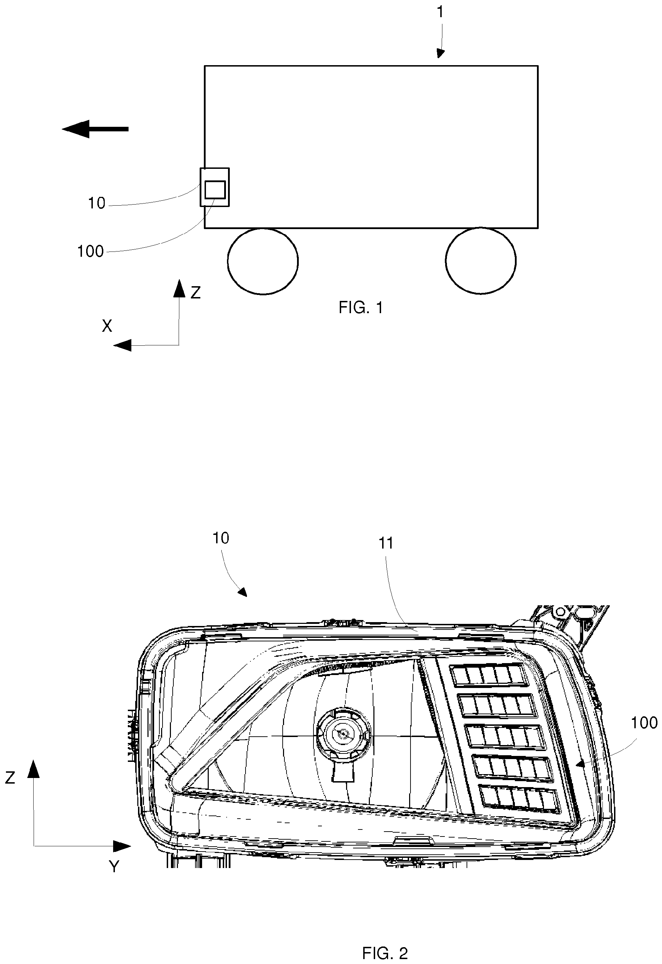

La direction selon laquelle le véhicule automobile se déplace en ligne droite est définie comme étant la direction longitudinale (axe X). Par convention, la direction perpendiculaire à la direction longitudinale, située dans un plan parallèle au sol, est nommée direction transversale (axe Y). La troisième direction, perpendiculaire aux deux autres, est nommée direction verticale (axe Z). Le sens avant du véhicule automobile, selon la direction longitudinale, est représenté par une flèche sur la figure 1 et correspond au sens commun de marche avant d'un véhicule automobile. Evidemment, le sens avant est opposé au sens arrière.

La figure 1 illustre schématiquement un véhicule automobile 1 comprenant un dispositif d'éclairage ou de signalisation 10 selon un mode de réalisation de l'invention. Le dispositif d'éclairage ou de signalisation 10 comprend un module optique 100 selon un mode de réalisation de l'invention.

La description suivante concerne un dispositif d'éclairage ou de signalisation 10 disposé à l'avant gauche, illustré sur la figure 2, c'est-à-dire éclairant principalement à l'avant gauche ou signalant principalement à l'avant gauche du véhicule automobile 1. Evidemment, le véhicule automobile 1 comprend également un dispositif d'éclairage ou de signalisation disposé à l'avant droit, identique ou sensiblement identique au dispositif 10, ses formes étant globalement obtenues par symétrie par rapport à un plan médian vertical longitudinal du véhicule automobile 1.

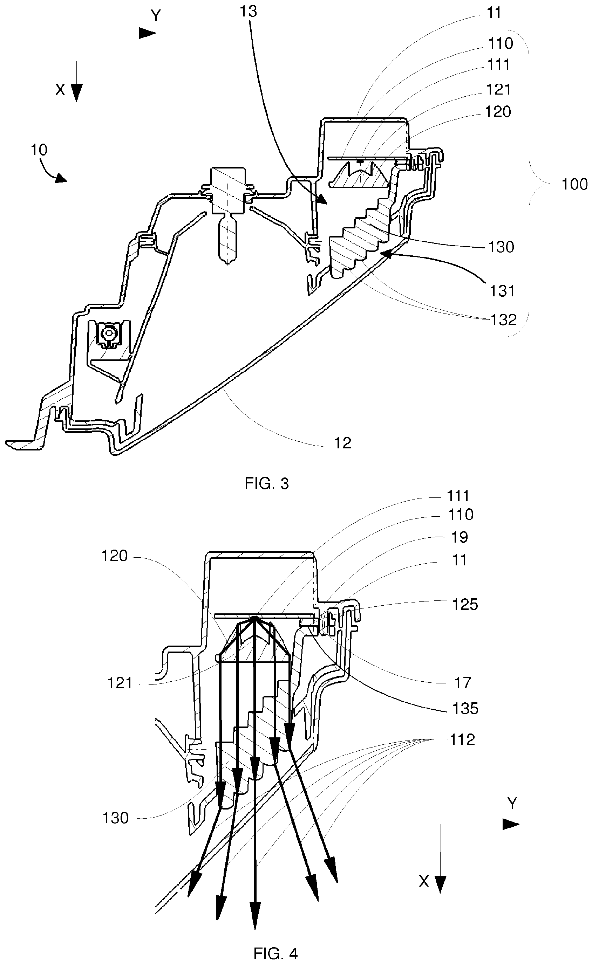

Comme illustré sur la figure 3, le dispositif d'éclairage ou de signalisation 10 du véhicule automobile 1 comprend en particulier une enceinte 13 formée par un boîtier 11 et une vitre 12 ou glace. L'enceinte 13 reçoit en outre le module optique 100. Ce module optique 100 comprend une carte de circuit imprimé 110 munie d'au moins une source lumineuse 111. De préférence l'au moins une source lumineuse 111 est de type diode électroluminescente.

Le module optique 100 comprend également un ensemble optique arrière 120 comprenant de préférence au moins un collimateur 121, par exemple un collimateur 121 de type Fresnel, disposé en vis-à-vis de l'au moins une source lumineuse 111. Le module optique 100 comprend également un ensemble optique avant 130, distinct de l'ensemble optique arrière 120 de préférence. L'ensemble optique avant 130 est doté d'une face avant 131 comprenant au moins deux surfaces 132 d'éclairage s'étendant sensiblement le long d'un plan transverse vertical. Ces au moins deux surfaces 132 d'éclairage transverses sont disposées à différents niveaux dans la direction longitudinale pour former au moins deux marches d'une forme globale en escalier. Sur le mode de réalisation illustré, la face avant 131 comprend une forme globale en escalier présentant cinq marches. De préférence, l'ensemble optique avant 130 est empilé, en contact direct, avec l'ensemble optique arrière 120, selon la direction longitudinale X. En d'autres termes, au moins une surface de contact 125 de préférence plane, ou sensiblement plane, de l'ensemble optique arrière 120 est assemblée sur une surface de contact 135 correspondante, de préférence plane, ou sensiblement plane, de l'ensemble optique avant 130. Les surfaces de contact 125, 135 sont de préférence parallèles, ou sensiblement parallèles, à un plan transversal vertical YZ c'est-à-dire perpendiculaires, ou sensiblement perpendiculaires, à l'axe longitudinal X. Ceci afin de favoriser un empilement précis selon l'axe longitudinal X de l'ensemble optique avant 130 sur l'ensemble optique arrière 120. Evidemment, il peut être ménagé des surfaces de contact 125, 135, respectivement sur les ensembles optique arrière 120 et avant 130, présentant des formes aptes à coïncider l'une sur l'autre, voire l'une dans l'autre.

Comme évoqué précédemment et illustré sur la figure 4, l'ensemble optique arrière 120 comprend au moins un collimateur 121. Le collimateur 121 a pour fonction d'aligner parallèlement à l'axe longitudinal du véhicule automobile 1, ou sensiblement parallèlement, des rayons 112 de lumière émis par la source de lumière 111 à laquelle le collimateur 121 est associé. Ainsi, le collimateur 121 est aligné selon la direction longitudinale en vis-à-vis, ou sensiblement en vis-à-vis, de la source de lumière 111 à laquelle il est associé.

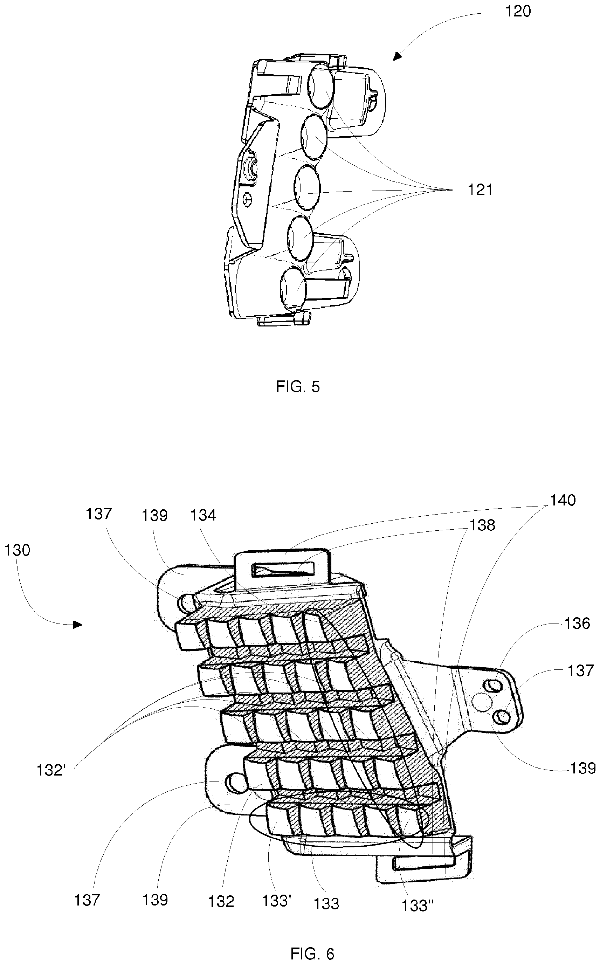

Un ensemble optique arrière 120 est illustré sur la figure 5. De préférence, l'ensemble optique arrière 120 comprend cinq collimateurs 121, agencés les uns au-dessus des autres selon la direction verticale ou selon une direction inclinée par rapport à la direction verticale. En effet, selon le mode de réalisation illustré, cinq sources de lumière 111 sont agencées également les une au-dessus des autres selon la direction verticale ou selon une direction inclinée par rapport à la direction verticale, sur la carte de circuit imprimé 110. Plus généralement, en cas de carte de circuit imprimé 110 comprenant n sources de lumière 111, l'ensemble optique arrière 120 comprend évidemment n collimateurs 121, c'est-à-dire un collimateur 121 par source de lumière 111.

Un ensemble optique avant 130 est illustré sur la figure 6. L'ensemble optique avant 130 a une fonction différente de celle de l'ensemble optique arrière 120. L'ensemble optique avant 130 oriente de nouveau les rayons 112 de lumière, qui entrent par sa face arrière selon une orientation longitudinale parallèle après leur sortie d'au moins un collimateur 121, selon des directions d'éclairage choisies, comme illustré sur la figure 4, en sortie par la face avant 131 de l'ensemble optique avant 130. L'ensemble optique avant 130 comprend, en cas de carte de circuit imprimé 110 munie d'une seule source de lumière 111, au moins deux surfaces 132 d'éclairage transverses. Par « surfaces d'éclairage transverses », on entend des surfaces d'éclairage 132 s'étendant sensiblement transversalement. Comme explicité, ces surfaces 132 d'éclairage transverses remplissent une fonction optique de distribution de l'éclairage dans un angle choisi et standard, et présentent ainsi en réalité une surface courbée, non plane. Les au moins deux surfaces 132 d'éclairage transverses sont de préférence disposées à différents niveaux dans la direction longitudinale pour former au moins deux marches d'une forme globale en escalier. Comme illustré notamment sur la figure 6, cinq surfaces 132 d'éclairage transverses sont utilisées par source de lumière 111. Dans le mode de réalisation illustré qui comprend une carte de circuit imprimé 110 dotée de cinq source de lumière 111, vingt cinq surfaces 132 d'éclairage transverses sont alors ménagées sur la face avant 131, en cinq rangées superposées verticalement de cinq surfaces 132. A chaque source de lumière 111 est associée une seule rangée ou ligne 133 de cinq surfaces 132 d'éclairage transverses. Cinq surfaces 132 d'éclairage transverses d'une même ligne 133 étant à différents niveaux dans la direction longitudinale, elles forment cinq marches de forme globale en escalier. Selon une variante, les lignes 133 de surfaces 132 d'éclairage transverses peuvent s'étendre selon une ou des directions inclinées, avec une composante verticale. Elles peuvent être parallèles entre elles ou non. Les extrémités 133', 133" des lignes 133 peuvent être alignées verticalement, ou sensiblement alignées verticalement, ou encore être décalées d'un pas donné, c'est-à-dire décalées régulièrement les unes par rapport aux autres. Evidemment, ces lignes 133 peuvent également être décalées irrégulièrement. De préférence, les surfaces 132 d'éclairage transverses d'une même ligne 133 sont agencées côte à côte, avec un espace nul, ou sensiblement nul, entre chaque surface 132 dans une direction transversale.

Evidemment, l'ensemble optique avant 130 peut comprendre moins de cinq lignes 133 de surfaces 132 d'éclairage transverses ou plus de cinq lignes 133. L'ensemble optique avant 130 peut comprendre également moins de cinq colonnes 134 de surfaces 132 d'éclairage transverses ou plus de cinq colonnes 134. En effet, les nombres de lignes 133 et/ou de colonnes 134 dépendent en particulier du style que l'on souhaite obtenir.

De préférence, comme illustré sur la figure 6, deux surfaces 132 d'éclairage transverses agencées côte à côte dans une même colonne 134 sont espacées. Ainsi, un tel espace entre deux surfaces 132 d'une même colonne 134 peut constituer avantageusement une surface optique supplémentaire 132'. Chaque surface optique supplémentaire 132' joue donc un rôle optique et est par exemple plane ou sensiblement plane.

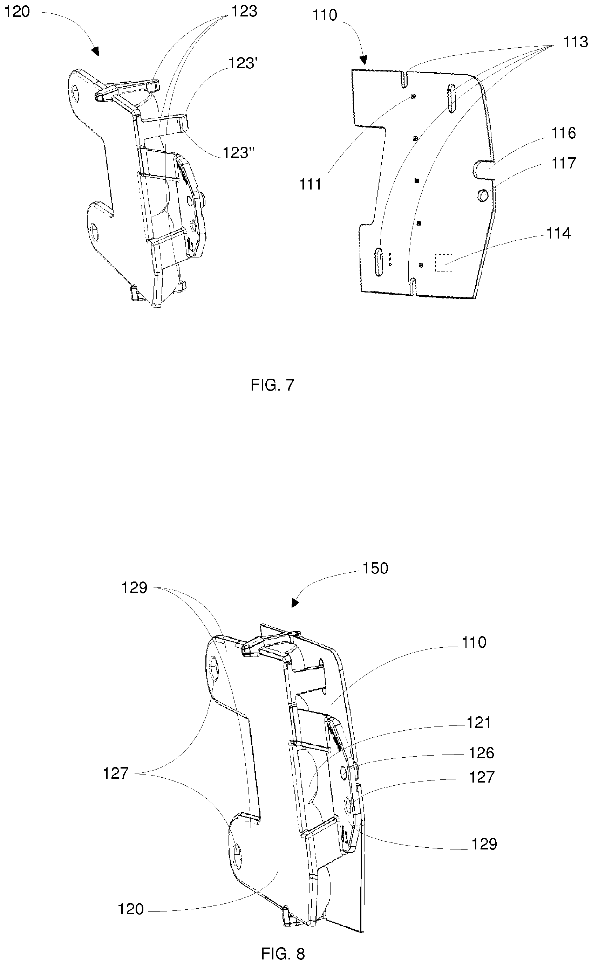

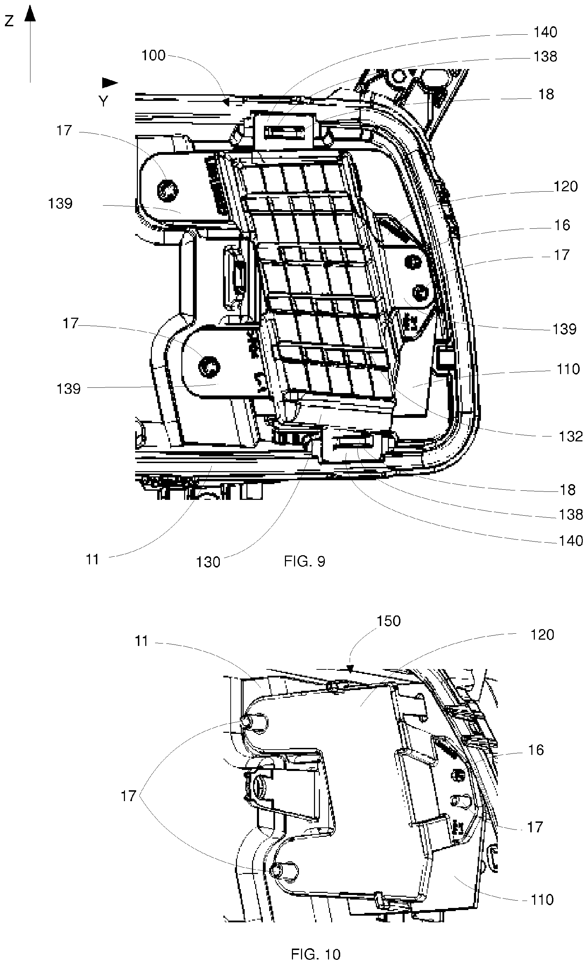

Comme illustré sur les figures 3, 4, 6, 7, 8 et plus précisément sur les figures 9 et 10, le boîtier 11 comprend des moyens de positionnement du module optique 100. Ces moyens de positionnement du module optique 100 comprennent par exemple au moins deux axes 17, de préférence au moins deux axes 17 s'étendant longitudinalement ou sensiblement longitudinalement depuis le fond 19 du boîtier 11 vers l'avant du boîtier 11. Avantageusement, comme dans le mode de réalisation illustré sur la figure 10, trois axes 17 s'étendent depuis le fond 19 du boîtier 11. De préférence, les axes 17 sont disposés de chaque côté, selon une direction verticale de l'aire utilisée à des fins optiques par le module optique 100. Evidemment, quatre axes 17 ou davantage peuvent également convenir. Par « axe », on entend un cylindre de révolution c'est-à-dire de section circulaire, ou sensiblement circulaire, et constante, ou sensiblement constante, sur sa longueur. Alternativement, un autre type de protubérance à section non circulaire constante, ou sensiblement constante, sur sa longueur, s'étendant longitudinalement depuis le fond 19 du boîtier 11 vers l'avant, peut convenir. De préférence, l'ensemble optique arrière 120 comprend au moins un moyen de positionnement. Chaque moyen de positionnement peut comprendre au moins deux orifices 127, notamment de type alésage d'axe longitudinal ou sensiblement longitudinal. Comme illustré sur les figures 8 et 10, de préférence trois orifices 127, de préférence ménagés chacun dans une oreille 129 de l'ensemble optique arrière 120, sont destinés à être insérés sur trois axes 17 du boîtier 11.

De préférence, l'ensemble optique avant 130 comprend également au moins un moyen de positionnement. Chaque moyen de positionnement peut comprendre au moins deux orifices 137, par exemple de type alésage d'axe longitudinal ou sensiblement longitudinal. Comme illustré sur les figures 6 et 9, trois orifices 137, de préférence ménagés chacun dans une oreille 139 de l'ensemble optique avant 130, sont destinés à être insérés sur trois axes 17 du boîtier 11.

Sur le mode de réalisation choisi, les deux ensembles optiques arrière 120 et avant 130 possèdent trois oreilles 129, 139 distinctes, réparties au mieux sur le pourtour de chaque ensemble optique, selon les axes X, Y, Z, formant trois surfaces planes éloignées qui garantissent la précision du positionnement.

La présente divulgation porte aussi sur un procédé de fabrication d'un dispositif d'éclairage, non couvert par les revendications. Avantageusement, le dispositif d'éclairage ou de signalisation 10, et en particulier le module optique 100, sont obtenus par un assemblage sans vis selon l'axe longitudinal X, comme cela va être détaillé ci-après.

En effet, comme illustré principalement sur les figures 7 et 8, la carte de circuit imprimé 110 plane, ou sensiblement plane, est apte à être assemblée avec l'ensemble optique arrière 120. L'ensemble comprenant la carte de circuit imprimé 110 doté de n sources de lumière 111 et l'ensemble optique arrière 120 comprenant n collimateurs 121 constitue, une fois assemblés, une première partie 150 du module optique 100. Pour ce faire, des orifices et/ou dégagements 113 sont ménagés dans la carte de circuit imprimé 110. Ces orifices et/ou dégagements 113 coopèrent, par exemple par clippage, avec des protubérances 123 de l'ensemble optique arrière 120. Ces protubérances 123 s'étendent longitudinalement, ou sensiblement longitudinalement, vers l'arrière et ont de préférence une extrémité arrière dotée d'un biseau 123', éventuellement un biseau 123' doté d'une encoche 123". Ces encoches 123" assurent le maintien en position de la carte de circuit imprimé 110 avec l'ensemble optique arrière 120, le ou les collimateurs 121 assurant éventuellement un rôle de butée selon la direction longitudinale lors de l'assemblage. On peut souligner que les emplacements des protubérances 123, comme les emplacements des orifices 113 sont en dehors de l'aire utilisée à des fins optiques par le module optique 100. Ces protubérances 123 et orifices 113, en plus d'assurer la fixation de l'ensemble optique arrière 120 sur la carte de circuit imprimé 110, jouent un rôle de détrompeur. En effet, il est uniquement possible d'assembler l'ensemble optique arrière 120 avec la carte de circuit imprimé 110 de sorte à ce que chaque source de lumière 111 se retrouve en vis-à-vis, et parfaitement centrée, par rapport à un collimateur 121 associé à cette au moins une source de lumière 111. Naturellement, tout autre moyen de fixation de l'ensemble optique arrière 120 sur la carte de circuit imprimé 110 pourrait en variante être implémenté.

Comme illustré principalement sur la figure 10, la première partie 150 du module optique 100 est ensuite insérée dans le boîtier 11 du dispositif d'éclairage. A noter que la carte de circuit imprimé 110 se retrouve vers l'arrière. Les axes 17 du boîtier 11 mentionnés plus haut assurent un positionnement précis en coopérant avec les orifices 127 de l'ensemble optique arrière 120. De préférence, un orifice 117 de la carte de circuit imprimé 110 s'insère sur un axe 17 et concourt ainsi au positionnement précis de la première partie 150 dans le boîtier 11.

Le boîtier 11 comprend en outre des moyens de fixation du module optique 100. Le boîtier 11 comprend d'abord des moyens de fixation de la première partie 150 sur le boîtier 11. Ensuite, le boîtier 11 comprend aussi des moyens de fixation de l'ensemble optique avant 130 sur le boîtier 11.

Les moyens de fixation de la première partie 150 du module optique 100 sur le boîtier 11 comprennent par exemple au moins une tige 16. De préférence, la au moins une tige 16 s'étend longitudinalement ou sensiblement longitudinalement depuis le fond 19 du boîtier 11 vers l'avant du boîtier 11. Dans le mode de réalisation illustré, une seule tige 16 est disposée dans le boîtier 11 en dehors de l'aire utilisée à des fins optiques par le module optique 100. Cette tige 16 a de préférence une section circulaire, ou sensiblement circulaire, constante ou sensiblement constante sur sa longueur. Ainsi, lors de l'assemblage, la tige 16 traverse un dégagement 116 ménagé dans la carte de circuit imprimé 110 avant de traverser un orifice 126 de l'ensemble optique arrière 120. De préférence, l'orifice 126 est placé sur la surface de contact 125 destinée à venir au contact de la surface de contact 135 de l'ensemble optique avant 130. Pour limiter, voire annuler, tout mouvement entre la première partie 150 du module optique 100 et le boîtier 11, une fois la première partie 150 insérée sur les axes 17 et la tige 16, celle-ci est bouterollée. Plus précisément l'extrémité située vers l'avant de la tige 16 est chauffée pour subir une déformation de sorte à étendre sa matière sur une surface supérieure à celle de sa section. Ainsi, l'empilement boîtier 11, carte de circuit imprimé 110 et ensemble optique arrière 120 est bloqué au niveau de cette tige 16, qui assure la fixation de la première partie 150 sur le boîtier 11. Les moyens de positionnement évoqués précédemment et cette tige bouterollée empêchent tout mouvement entre ces pièces. A noter qu'une autre section de la tige 16, constante ou sensiblement constante, sur sa longueur, peut convenir. Selon une variante, davantage de tiges 16, de dégagements 116 et d'orifices 126 associés, peuvent également être utilisés.

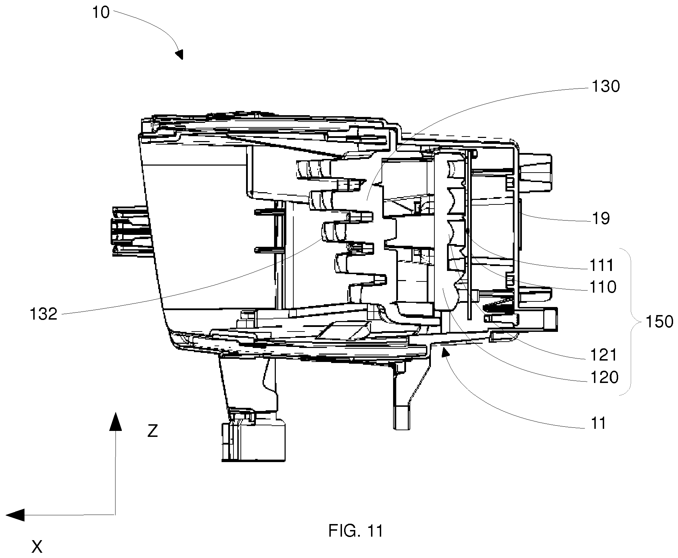

Le boîtier 11 comprend en outre des moyens de fixation de l'ensemble optique avant 130 sur le boîtier 11. Ces moyens de fixation, comme illustrés sur les figures 6 et 9, comprennent au moins une ouverture 138 ménagée dans l'ensemble optique avant 130, à distance de surfaces 132 d'éclairage transverses, c'est-à-dire à distance de l'aire utilisée à des fins optiques. Dans le mode de réalisation illustré, une ouverture 138 est ménagée sur chacune des deux oreilles 140 haute et basse de l'ensemble optique avant 130. Les deux oreilles 140 sont ménagées de part et d'autre des surfaces 132 d'éclairage transverses selon une direction verticale. Chaque ouverture 138 est destinée à coopérer, éventuellement par clippage, avec une languette 18 ménagée de préférence sur l'avant du boîtier 11. En variante, cette languette est utilisée pour le bon positionnement de l'ensemble optique, et la fixation est finalisée à l'aide d'un collage. Comme évoqué précédemment, l'ensemble optique avant 130 est doté d'orifices 137, visibles sur la figure 6, coopérant avec les axes 17 du boîtier 11 à des fins de positionnement. Dans ce mode de réalisation, les orifices 137 sont donc superposés aux orifices 127 de l'ensemble optique arrière 120, et les mêmes axes 17 du circuit imprimé 111 et du boîtier 11 garantissent le bon positionnement des deux ensembles optiques 120, 130. Cette approche est avantageuse en ce qu'elle optimise la bonne fixation des différentes pièces de l'assemblage entre elles. En variante, un ou plusieurs axes distincts pour chaque ensemble optique pourraient naturellement être prévus. En complément, il est avantageux de constater que le positionnement de l'ensemble optique avant 130 comprend un positionnement d'une part en contact direct avec l'ensemble optique arrière 120, par les surfaces de contact 125, 135, et d'autre part un positionnement direct sur le boîtier 11 : un tel assemblage permet de garantir un bon positionnement relatif des différentes pièces du module optique, ainsi que le bon positionnement de l'ensemble dans le boîtier, avec une bonne résistance aux vibrations. Après l'assemblage de l'ensemble optique avant 130, on obtient l'empilement illustré sur la figure 11, la première partie 150 prise en sandwich entre le fond 19 du boîtier 11 et l'ensemble optique avant 130.

Il est important que le positionnement dans un plan transversal vertical YZ soit précis entre l'ensemble optique avant 130, l'ensemble optique arrière 120 et la carte de circuit imprimé 110. Pour rappel, la carte de circuit imprimé 110 supporte au moins une source lumineuse 111 dont les faisceaux 112 sont orientés par au moins un collimateur 121 de l'ensemble optique arrière 120, avant d'être orientés à nouveau par l'ensemble optique avant 130, notamment au niveau de surfaces 132 d'éclairage transverses.

Ainsi, le procédé de fabrication d'un dispositif d'éclairage ou de signalisation 10 comprend les étapes suivantes :
- assembler l'ensemble optique arrière 120 comprenant au moins un collimateur 121 sur la carte de circuit imprimé 110, de sorte à ce que l'au moins une source lumineuse 111 du circuit imprimé 110 soit en vis-à-vis de l'ensemble optique arrière 120, pour obtenir une première partie 150 de module optique 100, par exemple par clippage,
- fixer la première partie 150 de module optique 100 dans le boîtier 11, par exemple par bouterollage,
- assembler l'ensemble optique avant 130 sur la première partie 150 de module optique 100 et sur le boîtier 11, par exemple par clippage d'au moins une languette 18 du boîtier 11 avec au moins une ouverture 138 ménagée dans l'ensemble optique avant 130, de sorte à ce que l'ensemble optique avant 130 se retrouve en contact direct avec l'ensemble optique arrière 120, la face avant 131 de l'ensemble optique avant 130 étant orientée vers l'avant du boîtier 11.

Comme évoqué précédemment, l'étape d'assemblage de l'ensemble optique avant 130 sur la première partie 150 de module optique 100 et sur le boîtier 11 est de préférence suivie d'une étape de collage au niveau de l'au moins une languette 18 du boîtier 11 coopérant avec l'au moins une ouverture 138 d'une oreille 140 de l'ensemble optique avant 130.

En outre, le procédé comprend une étape de connexion d'une unité de commande 114 de l'au moins une source lumineuse 111 avec le boîtier 11 ou encore avec un faisceau, par exemple avant l'étape d'assemblage de la première partie 150 de module optique 100 dans le boîtier 11. Avantageusement, l'unité de commande 114 est intégrée à la carte de circuit imprimé 110 et/ou est de préférence placée sur la face opposée à la face supportant la au moins une source lumineuse 111. Avantageusement, chaque ensemble optique 120, 130 est obtenu par injection plastique, par exemple par injection plastique d'une matière de type PC ou PMMA. En effet, chaque ensemble optique arrière et avant 120, 130 se présente en une seule pièce monobloc ayant des dimensions compatibles avec un tel procédé d'obtention.

En remarque, la solution atteint donc l'objet recherché de proposer un module optique 100 d'un dispositif d'éclairage ou de signalisation 10 d'un véhicule automobile 1, doté de formes complexes, facile à assembler et économique à produire.

Naturellement, l'invention ne se limite pas au mode de réalisation décrit. Notamment, les deux ensembles optiques avant et arrière pourraient présenter des formes légèrement différentes, remplissant la même fonction. Les moyens de positionnement pourraient être en nombre différent et/ou se présenter sous une autre forme. De même, les moyens de fixation des ensembles optiques pourraient être différents, mécanique et/ou par collage.

Bien que la description corresponde à un dispositif d'éclairage ou de signalisation 10 disposé à l'avant du véhicule automobile 1, il peut être adapté à un dispositif disposé à l'arrière, par exemple un dispositif comprenant une fonction de feu stop et/ou une fonction de feu de position arrière et/ou une fonction de feu de brouillard arrière.

L'invention est particulièrement bien adaptée à un module optique d'un dispositif d'éclairage ou de signalisation d'un véhicule automobile. Elle porte sur un dispositif d'éclairage ou de signalisation en tant que tel intégrant un tel module optique. Elle porte également sur un véhicule automobile en tant que tel intégrant un tel dispositif de d'éclairage ou de signalisation ou un tel module optique.

## Revendications

1. Dispositif d'éclairage ou de signalisation (10) d'un véhicule automobile (1) comprenant une enceinte (13) formée par un boîtier (11) et une vitre (12), l'enceinte (13) recevant un module optique (100) comprenant une carte de circuit imprimé (110) munie d'au moins une source lumineuse (111), notamment une source lumineuse de type diode électroluminescente, et un ensemble optique arrière (120) comprenant au moins un collimateur (121), notamment un collimateur (121) de type Fresnel, disposé en vis-à-vis de l'au moins une source lumineuse (111), le module optique (100) comprenant un ensemble optique avant (130), distinct de l'ensemble optique arrière (120), doté d'une face avant (131) comprenant au moins deux surfaces (132) d'éclairage transverses disposées à différents niveaux dans la direction longitudinale pour former au moins deux marches d'une forme globale en escalier, l'ensemble optique avant (130) étant fixé en contact direct avec l'ensemble optique arrière (120),
le boîtier (11) comprenant des moyens de positionnement du module optique (100) et au moins un moyen de fixation du module optique (100),
les moyens de positionnement du module optique (100) comprenant au moins deux axes (17), notamment au moins deux axes (17) s'étendant longitudinalement ou sensiblement longitudinalement depuis le fond (19) du boîtier (11) vers l'avant du boîtier (11), le dispositif comprenant un moyen de fixation du module optique (100) comprenant au moins une tige (16), notamment au moins une tige (16) bouterollée s'étendant longitudinalement ou sensiblement longitudinalement depuis le fond (19) du boîtier (11) vers l'avant du boîtier (11),
et l'ensemble optique arrière (120) comprenant des protubérances (123) coopérant avec des orifices et/ou dégagements (113) de la carte de circuit imprimé (110) pour la fixation de l'ensemble optique arrière (120) et de la carte de circuit imprimé (110).

2. Dispositif d'éclairage ou de signalisation (10) selon la revendication précédente, **caractérisé en ce que** l'ensemble optique arrière (120) et l'ensemble optique avant (130) se présentent chacun en une seule pièce monobloc, l'ensemble optique arrière (120) et l'ensemble optique avant (130) comprenant chacun au moins un moyen de positionnement.

3. Dispositif d'éclairage ou de signalisation (10) selon la revendication précédente, **caractérisé en ce qu'**au moins un moyen de positionnement comprend un orifice (127, 137).

4. Dispositif d'éclairage ou de signalisation (10) selon l'une des revendications précédentes, **caractérisé en ce que** l'ensemble optique arrière (120) et l'ensemble optique avant (130) comprennent des surfaces de contact (125 ; 135) participant à leur fixation respective.

5. Dispositif d'éclairage ou de signalisation (10) d'un véhicule automobile (1) selon l'une des revendications précédentes, **caractérisé en ce que** le boîtier (11) comprend au moins un moyen de positionnement commun aux deux ensembles optiques arrière (120) et avant (130).

6. Dispositif d'éclairage ou de signalisation (10) d'un véhicule automobile (1) selon l'une des revendications précédentes, **caractérisé en ce que** le au moins un moyen de fixation du module optique (100) comprend au moins une ouverture (138) ménagée dans l'ensemble optique avant (130) coopérant avec au moins une languette (18) ménagée sur l'avant du boîtier (11).

7. Véhicule automobile (1), **caractérisé en ce qu'**il comprend un dispositif d'éclairage ou de signalisation (10) selon l'une des revendications 1 à 6.

## Patentansprüche

1. Beleuchtungs- oder Signalvorrichtung (10) eines Kraftfahrzeugs (1), die einen von einem Gehäuse (11) und einer Glasscheibe (12) gebildeten abgeschlossenen Raum (13) enthält, wobei der abgeschlossene Raum (13) ein optisches Modul (100) aufnimmt, das eine Druckschaltungskarte (110), die mit mindestens einer Lichtquelle (111) versehen ist, insbesondere einer Lichtquelle der Art Elektrolumineszenzdiode, und eine hintere optische Einheit (120) enthält, die mindestens einen Kollimator (121) enthält, insbesondere einen Kollimator (121) vom Fresnel-Typ, der gegenüber der mindestens einen Lichtquelle (111) angeordnet ist, wobei das optische Modul (100) eine vordere optische Einheit (130) enthält, die sich von der hinteren optischen Einheit (120) unterscheidet, versehen mit einer Vorderseite (131), die mindestens zwei quer verlaufende Beleuchtungsflächen (132) enthält, die auf verschiedenen Höhen in der Längsrichtung angeordnet sind, um mindestens zwei Stufen einer globalen Treppenform zu bilden, wobei die vordere optische Einheit (130) in direktem Kontakt mit der hintere optische Einheit (120) befestigt ist, wobei das Gehäuse (11) Positioniereinrichtungen des optischen Moduls (100) und mindestens eine Befestigungseinrichtung des optischen Moduls (100) enthält,
wobei die Positioniereinrichtungen des optischen Moduls (100) mindestens zwei Achsen (17) enthalten, insbesondere mindestens zwei Achsen (17), die sich in Längsrichtung oder im Wesentlichen in Längsrichtung vom Boden (19) des Gehäuses (11) zur Vorderseite des Gehäuses (11) erstrecken,
wobei die Vorrichtung eine Befestigungseinrichtung des optischen Moduls (100) enthält, die mindestens eine Stange (16) enthält, insbesondere mindestens eine eingeschnappte Stange (16), die sich in Längsrichtung oder im Wesentlichen in Längsrichtung vom Boden (19) des Gehäuses (11) zur Vorderseite des Gehäuses (11) erstreckt,
und die hintere optische Einheit (120) Vorsprünge (123) enthält, die mit Öffnungen und/oder Aussparungen (113) der Druckschaltungskarte (110) zur Befestigung der hinteren optischen Einheit (120) und der Druckschaltungskarte (110) zusammenwirken.

2. Beleuchtungs- oder Signalvorrichtung (10) nach dem vorhergehenden Anspruch, **dadurch gekennzeichnet, dass** die hintere optische Einheit (120) und die vordere optische Einheit (130) je in einem einzigen einstückigen Bauteil vorliegen, wobei die hintere optische Einheit (120) und die vordere optische Einheit (130) je mindestens eine Positioniereinrichtung enthalten.

3. Beleuchtungs- oder Signalvorrichtung (10) nach dem vorhergehenden Anspruch, **dadurch gekennzeichnet, dass** mindestens eine Positioniereinrichtung eine Öffnung (127, 137) enthält.

4. Beleuchtungs- oder Signalvorrichtung (10) nach einem der vorhergehenden Ansprüche, **dadurch gekennzeichnet, dass** die hintere optische Einheit (120) und die vordere optische Einheit (130) Kontaktflächen (125; 135) enthalten, die an ihrer jeweiligen Befestigung mitwirken.

5. Beleuchtungs- oder Signalvorrichtung (10) eines Kraftfahrzeugs (1) nach einem der vorhergehenden Ansprüche, **dadurch gekennzeichnet, dass** das Gehäuse (11) mindestens eine Positioniereinrichtung enthält, die den zwei hinteren (120) und vorderen optischen Einheiten (130) gemeinsam ist.

6. Beleuchtungs- oder Signalvorrichtung (10) eines Kraftfahrzeugs (1) nach einem der vorhergehenden Ansprüche, **dadurch gekennzeichnet, dass** die mindestens eine Befestigungseinrichtung des optischen Moduls (100) mindestens eine in der vorderen optischen Einheit (130) vorgesehene Öffnung (138) enthält, die mit mindestens einer an der Vorderseite des Gehäuses (11) vorgesehenen Zunge (18) zusammenwirkt.

7. Kraftfahrzeug (1), **dadurch gekennzeichnet, dass** es eine Beleuchtungs- oder Signalvorrichtung (10) nach einem der Ansprüche 1 bis 6 enthält.

## Claims

1. Lighting or signalling device (10) for a motor vehicle (1), comprising an enclosure (13) formed by a housing (11) and a glass (12), the enclosure (13) receiving an optical module (100) comprising a printed circuit board (110) provided with at least one light source (111), in particular a light source of the LED type, and a rear optical assembly (120) comprising at least one collimator (121), in particular a collimator (121) of the Fresnel type, disposed facing the at least one light source (111), the optical module (100) comprising a front optical assembly (130), distinct from the rear optical assembly (120), provided with a front face (131) comprising at least two transverse lighting surfaces (132) disposed at different levels in the longitudinal direction in order to form at least two steps of a staircase overall shape, the front optical assembly (130) being fixed in direct contact with the rear optical assembly (120),
the housing (11) comprising means for positioning the optical module (100) and at least one means for fixing the optical module (100),
the means for positioning the optical module (100) comprising at least two stems (17), in particular at least two stems (17) extending longitudinally or substantially longitudinally from the back wall (19) of the housing (11) towards the front of the housing (11), the device comprising a means for fixing the optical module (100) comprising at least one stake (16), in particular at least one headed stake (16) extending longitudinally or substantially longitudinally from the back wall (19) of the housing (11) towards the front of the housing (11),
and the rear optical assembly (120) comprising protuberances (123) that cooperate with orifices and/or recesses (113) in the printed circuit board (110) in order to fix the rear optical assembly (120) and the printed circuit board (110).

2. Lighting or signalling device (10) according to the preceding claim, **characterized in that** the rear optical assembly (120) and the front optical assembly (130) are each in the form of a single one-piece component, the rear optical assembly (120) and the front optical assembly (130) each comprising at least one positioning means.

3. Lighting or signalling device (10) according to the preceding claims, **characterized in that** at least one positioning means comprises an orifice (127, 137).

4. Lighting or signalling device (10) according to one of the preceding claims, **characterized in that** the rear optical assembly (120) and the front optical assembly (130) comprise contact surfaces (125; 135) that are involved in their respective fixing.

5. Lighting or signalling device (10) for a motor vehicle (1) according to one of the preceding claims, **characterized in that** the housing (11) comprises at least one positioning means shared by the rear optical assembly (120) and front optical assembly (130).

6. Lighting or signalling device (10) for a motor vehicle (1) according to one of the preceding claims, **characterized in that** the at least one means for fixing the optical module (100) comprises at least one opening (138) formed in the front optical assembly (130) cooperating with at least one tab (18) formed on the front of the housing (11).

7. Motor vehicle (1), **characterized in that** it comprises a lighting or signalling device (10) according to one of Claims 1 to 6.
